# EUROPÄISCHE PATENTSCHRIFT

(11) **EP 0 803 314 B1**
(45) Veröffentlichungstag und Bekanntmachung des Hinweises auf die Patenterteilung: **14.11.2001**
(21) Anmeldenummer: 97106017.3
(22) Anmeldetag: 11.04.1997
(51) Int. Cl.: B23K 20/12

(54) **Vorrichtung und Verfahren zum Fügen zweier Rohre**
Device and method for joining two pipes
Dispositif et procédé pour assembler deux tubes

(30) Priorität: 24.04.1996 DE 19616285
(43) Veröffentlichungstag der Anmeldung: 29.10.1997
(73) Patentinhaber: Framatome ANP GmbH, 91058 Erlangen (DE)
(72) Erfinder: Engelhard, Gerhard, Dipl.-Ing., 91058 Erlangen (DE); Pellkofer, Dieter, Dipl.-Ing., 91074 Herzogenaurach (DE)
(74) Vertreter: Mörtel & Höfner

(56) Entgegenhaltungen:
- WO-A-95/26254
- DE-A- 3 112 770
- US-A- 4 063 676
- DATABASE WPI Section Ch, Week 8847 Derwent Publications Ltd., London, GB; Class M23, AN 88-336237 XP002049773 & SU 1 393 566 A (VILN FUEL EQUIP WKS) , 7.Mai 1988

## Beschreibung

Die Erfindung bezieht sich auf eine Vorrichtung und ein Verfahren zum Fügen zweier Rohre durch Reibschweißen.

Eine Vorrichtung und ein Verfahren zum Fügen zweier zylindrischer Körper durch Reibschweißen sind bekannt aus SU 1393566, welche als nächstliegender Stand der Technik anzusehen ist.

Zum Fügen zweier Werkstücke, beispielsweise Werkstücke aus Aluminium oder aus einer Aluminiumlegierung, ist es beispielsweise aus der WO 93/10935 bekannt, das zum Verschweißen an der Stoß- oder Fügestelle der Werkstücke notwendige Plastifizieren oder Aufschmelzen des Grundwerkstoffes durch einen mit Reibung erzeugten Wärmeeintrag herbeizuführen. Hierzu ist ein Reibschweißkopf vorgesehen, der einen sich schnell bewegenden, beispielsweise rotierenden, Reibdorn enthält. Dieser Reibdorn besteht aus einem Werkstoff, der härter und höher schmelzend ist als der Werkstoff der zu fügenden Werkstücke. Beim Fügen zweier plattenförmiger Werkstücke wird dieser Reibdorn seitlich im Bereich der Stoßstelle der Werkstücke an die Werkstücke angesetzt. Er dringt dann aufgrund des durch die schnelle Drehbewegung verursachte Plastifizieren des Werkstoffes bei gleichzeitiger Vorwärtsbewegung entlang der Füge- oder Stoßstelle in die Werkstücke ein und bewirkt so beim Abkühlen des plastifizierten Bereiches ein Verschweißen der beiden Werkstücke.

Der Erfindung liegt nun die Aufgabe zugrunde, eine Vorrichtung und ein Verfahren der eingangs genannten Art derart zu ertüchtigen, dass sie auch zum Fügen zweier Rohre geeignet sind.

Die vorrichtungsbezogene Aufgabe wird gelöst mit den Merkmalen des Patentanspruches 1.

Die Vorrichtung zum Fügen zweier Rohre durch Reibschweißen umfasst gemäß der Erfindung einen aufklappbaren Führungsring für einen in ihm umlaufenden Reibschweißkopf, an dem ein radial zustellbarer Reibdorn angeordnet ist.

Das Verfahren zum Fügen zweier Rohre gemäß der Erfindung, ist in Anspruch 4 beschrieben.

Vorzugsweise ist der Führungsring aus zwei miteinander verbundenen ringförmigen Schalen gebildet, die unter Aufrechterhaltung einer Zugkraft zueinander axial verstellbar sind.

In einer weiteren vorteilhaften Ausgestaltung sind am Innenumfang des Führungsringes radial verstellbare Druckstempel zum Fixieren des Führungsringes an beiden Rohren vorgesehen.

Zur weiteren Erläuterung der Erfindung wird auf die Ausführungsbeispiele der Zeichnung verwiesen, in deren
FIG 1 eine Vorrichtung gemäß der Erfindung schematisch in einem Längsschnitt in einer Arbeitsposition veranschaulicht ist.
FIG 2 zeigt die Vorrichtung während des Positionierens an den Rohren in einer axialen Draufsicht.

In den Figuren 3 bis 8 sind vorteilhafte Ausführungsformen eines Reibdorns des Reibschweißkopfes veranschaulicht.

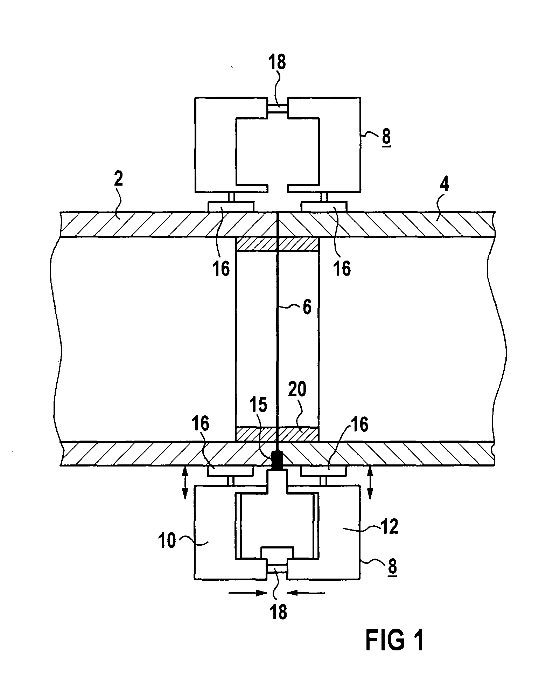

Gemäß FIG 1 sind zwei, beispielsweise aus Aluminium oder einer Aluminiumlegierung bestehende Rohre 2 und 4 an ihren einander gegenüberliegenden Stirnflächen unter Aufrechterhaltung einer Preßkraft aneinandergepreßt. Die Rohre 2 und 4 werden im Bereich der auf diese Weise gebildeten ringförmigen Stoßstelle 6 von einem Führungsring 8 umschlossen, der aus zwei ringförmigen Schalen 10 und 12 zusammengesetzt ist. Diese Schalen 10 und 12 bilden ein ringförmiges Gehäuse, in dem ein Reibschweißkopf 14 geführt ist, der im Führungsring 8 in Umfangsrichtung der Rohre 2 und 4 umläuft. Der Reibschweißkopf 14 umfaßt einen radial zustellbaren, schnell rotierenden oder sich schnell radial bewegenden Reibdorn 15, der im Bereich der Stoßstelle 6 unter Plastifizieren des Werkstoffes der Rohre 2 und 4 in die Rohrwand eindringt und beim Verfahren des Reibschweißkopfes 14 in Umfangsrichtung der Rohre 2 und 4 ein Verschweißen der Rohre 2 und 4 bewirkt.

Die Schalen 10 und 12 des Führungsringes 8 enthalten an ihrem Innenumfang verteilt eine Vielzahl von Druckstempeln 16, die radial nach innen ausgestellt werden und die Rohre 2 und 4 an der Stoßstelle 6 zueinander positionieren und fixieren. Diese Druckstempel 16 bewirken eine Versteifung, um die beim Reibschweißen auftretenden hohen Kräfte aufzunehmen und eine Deformation der Rohre 4 und 6 zu verhindern. Mit Hilfe dieser Druckstempel können die Rohre 2 und 4 erforderlichenfalls auch rundgedrückt werden.

Die Schalen 10 und 12 des Führungsringes 8 sind außerdem, beispielsweise mit Hydraulikzylindern 18, axial zueinander unter Aufrechterhaltung einer Zugkraft verstellbar, so daß die Rohre 2 und 4 die während des Reibschweißens fest aneinandergepreßt werden.

Im Ausführungsbeispiel der Figur ist am Innenumfang der Stoßstelle 6 zusätzlich ein Einlegering 20 angeordnet, mit dem die Wurzelausbildung verbessert und die Steifigkeit bei dünnen Rohren erhöht wird.

Der Reibschweißvorgang beginnt durch eine radiale Zustellbewegung des Reibdorns 15, der den Rohrwerkstoff an der Stoßstelle 6 plastifiziert und in die Wand der beiden Rohre 2 und 4 eindringt. Dieser radialen Zustellbewegung kann bereits eine Bewegung des Reibschweißkopfes 14 in Umfangsrichtung überlagert sein. Die radiale Zustellbewegung des Reibdorns 15 erfolgt vorzugsweise solange, bis die Rohrwand durchdrungen ist. Nach dem Durchdringen der Rohrwand und einem daran anschließenden kompletten Umlauf des Reibschweißkopfes 14 um die Stoßstelle 6 wird der Reibdorn 15 unter Aufrechterhaltung der Umlaufbewegung in Umfangsrichtung langsam aus der Rohrwand herausgezogen, so daß sich ein keilförmiger Auslauf ergibt. Dadurch ist sichergestellt, daß die Rohre 2 und 4 im Bereich der Schweißwurzel sicher und vollständig verschweißt sind. Das beim radialen Abheben unvermeidbar entstehende Loch wird auf diese Weise weitgehend verhindert.

Um beim Abheben eine Loch- oder Kraterbildung vollständig zu vermeiden, ist in einer bevorzugten Ausgestaltung vorgesehen, beim Auslaufvorgang zusätzlich artgleichen Schweißzusatz hinzuzufügen. Dies geschieht beispielsweise in Form eines Drahtes, der von außen oder durch den Reibdorn 15 hindurch an die Schweißstelle herangeführt wird. Prinzipiell ist es auch möglich, den Endkrater mit einem anderen Schmelz- und Schweißverfahren zu schließen.

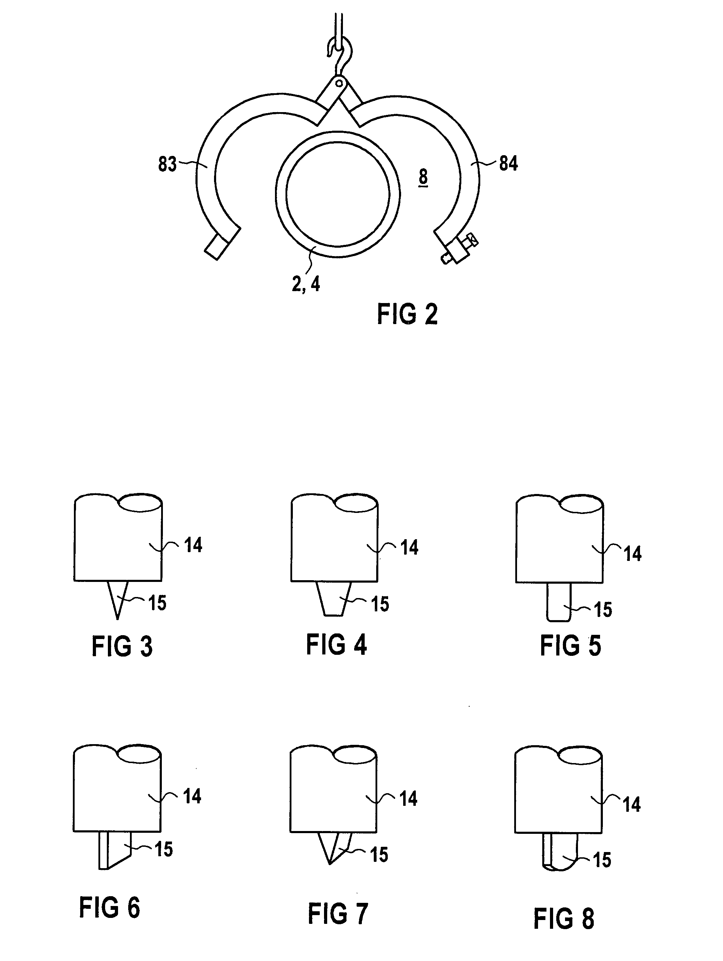

In FIG 2 ist zu erkennen, daß der Führungsring 8 aus zwei aufklappbaren Halbringen 82 und 84 besteht, um eine Montage an bereits aneinander anstoßenden Rohren 2, 4 zu ermöglichen.

Die in FIG 3 bis 5 dargestellten kegeligen bzw. stiftförmigen Reibdorne 15 sind insbesondere für Reibschweißköpfe geeignet, bei denen die Reibungswärme durch eine schnelle Rotation des Reibdornes 15 entsteht.

FIG 6 bis 8 zeigen Reibdorne 15, bei denen die Reibungswärme vorzugsweise durch eine schnelle Bewegung senkrecht zur Oberfläche des Werkstücks, d.h. radial zur Rohrwand erzeugt wird.

## Patentansprüche

1. Vorrichtung zum Fügen zweier Rohre (2, 4) durch Reibschweißen, mit einem aufklappbaren Führungsring (8) für einen in ihm umlaufenden Reibschweißkopf (14), der einen radial zustellbaren Reibdorn (15) umfaßt.

2. Vorrichtung nach Anspruch 1, bei der der Führungsring (8) aus zwei miteinander verbundenen ringförmigen Schalen (10, 12) gebildet wird, die unter Aufrechterhaltung einer Zugkraft zueinander axial verstellbar sind.

3. Vorrichtung nach Anspruch 1 oder 2, bei der am Innenumfang des Führungsringes (8) radial verstellbare Druckstempel (16) zum Fixieren des Führungsringes (8) an beiden Rohren (2 und 4) vorgesehen sind.

4. Verfahren zum Fügen zweier Rohre (2, 4) durch Reibschweißen unter Verwendung eines aufklappbaren Führungsrings (8) für einen in ihm umlaufenden Reibschweißkopf (14),
wobei die Rohre (2, 4) an ihren Stirnflächen gegeneinander gepreßt werden,
wobei an der so gebildeten Stoßstelle (6) ein Reibdorn (15) des Reibschweißkopfs (14) durch eine radiale Zustellbewegung unter Plastifizierung des Werkstoffs in die Wand der Rohre (2, 4) eindringt und die Rohre (2, 4) durch eine Bewegung in deren Umfangsrichtung miteinander verschweißt, und
wobei der Reibdorn (15) am Ende des Schweißens bei gleichzeitiger Bewegung in Umfangsrichtung radial nach außen abgehoben wird, so daß ein keilförmiger Auslauf der Schweißnaht gebildet wird.

## Claims

1. A device for joining two pipes (2, 4) by friction welding, having a hinged guide ring (8) for a friction welding head (14) rotating therein, which friction welding head (14) comprises a radially feedable friction mandrel (15).

2. A device according to claim 1, in which the guide ring (8) is composed of two connected annular shells, which may be axially adjusted relative to one another while maintaining a tensile force.

3. A device according to claim 1 or claim 2, in which radially adjustable pressure applicators (16) are provided at the internal circumference of the guide ring (8) to fix the guide ring (8) to the two pipes (2 and 4).

4. A process for joining two pipes (2, 4) by friction welding using a hinged guide ring (8) for a friction welding head (14) rotating therein,
wherein the pipes (2, 4) are pressed against one another at their end faces,
wherein, at the abutment point (6) thus formed, a friction mandrel (15) of the friction welding head (14) penetrates into the walls of the pipes (2, 4) through a radial feed movement while plasticising the material and welds the pipes (2, 4) together by moving in the circumferential direction thereof, and
wherein the friction mandrel (15) is withdrawn radially outwards at the end of the welding process while moving simultaneously in the circumferential direction, resulting in wedge-shaped runout of the weld seam.

## Revendications

1. Dispositif pour assembler deux tubes (2, 4) par soudage par friction, comportant une bague (8) de guidage rabattable pour une tête (14) de soudage par friction qui y tourne et comporte une broche (15) de friction pouvant avancer radialement.

2. Dispositif suivant la revendication 1, dans lequel la bague (8) de guidage est formée de deux coquilles (10, 12) annulaires, reliées l'une à l'autre, qui peuvent être déplacées axialement l'une par rapport à l'autre avec maintien d'une force de traction.

3. Dispositif suivant la revendication 1 ou 2, dans lequel il est prévu sur le pourtour intérieur de la bague (8) de guidage des dispositifs (16) d'application de pression pouvant être déplacés radialement pour immobiliser la bague (8) de guidage sur les deux tubes (2 et 4).

4. Procédé pour assembler deux tubes (2, 4) par soudage par friction en utilisant une bague (8) de guidage rabattable pour une tête (14) de soudage par friction qui y tourne, les tubes (2, 4) étant pressés l'un contre l'autre sur leurs faces frontales,
une broche (15) de friction de la tête (14) de soudage par friction rentrant dans la paroi des tubes (2, 4) au point (6) de joint ainsi formé, par un mouvement radial d'avance, avec ramollissement du matériau, et les tubes (2,4) étant soudés l'un à l'autre par un déplacement dans leur direction périphérique, et
la broche (15) de friction étant soulevée radialement vers l'extérieur à la fin du soudage avec un déplacement simultané dans la direction périphérique, si bien qu'il se forme une sortie cunéiforme du cordon de soudure.
